# EUROPÄISCHE PATENTSCHRIFT

(11) **EP 0 679 823 B1**
(45) Veröffentlichungstag und Bekanntmachung des Hinweises auf die Patenterteilung: **15.09.1999**
(21) Anmeldenummer: 95105995.5
(22) Anmeldetag: 21.04.1995
(51) Int. Cl.: F16K 27/02, B60T 8/36

(54) **Patronenventil**
Cartridge valve
Soupape à cartouche

(30) Priorität: 27.04.1994 DE 4414583
(43) Veröffentlichungstag der Anmeldung: 02.11.1995
(73) Patentinhaber: Continental Teves AG & Co. oHG, 60488 Frankfurt (DE)
(72) Erfinder: Volz, Peter, D-64231 Darmstadt (DE); Zaviska, Dalibor, D-65760 Eschborn/Ts. (DE)

(56) Entgegenhaltungen:
- EP-A- 0 177 397
- DE-A- 3 619 927
- DE-A- 4 132 471
- DE-A- 4 221 988
- FR-A- 2 638 506
- US-A- 5 184 804

## Beschreibung

Die Erfindung betrifft ein Ventil, insbesondere Elektromagnetventil nach dem Oberbegriff des Anspruchs 1.

Aus der DE4221988A1 ist bereits ein Elektromagnetventil bekannt geworden, dessen Ventilgehäuse in einer Stufenbohrung des Ventilaufnahmekörpers abgedichtet befestigt ist. Die Befestigung des Ventilgehäuses in der Stufenbohrung des Ventilaufnahmekörpers geschieht mittels zwei am Umfang des Ventilgehäuses nutförmig umlaufende Ausnehmungen, in die während des Einpreßvorganges das Werkstoffvolumen des Ventilaufnahmekörpers verdrängt wird. Durch das geringe Passungsspiel des hülsenförmigen Ventilgehäuses in der Stufenbohrung des Ventilaufnahmekörpers und die während des Umformvorganges hervorgerufene Verdrängerwirkung des Werkstoffsvolumens der Stufenbohrung in die nutförmige Ausnehmung am Ventilgehäuse, ist ein Loslösen von Oberflächenpartikeln im Bereich der Umformstelle nicht auszuschließen, so daß abgelöste Oberflächenpartikel mit in den flüssigkeitsumspülten Hohlraum des Ventilgehäuses eindringen können, die zu einer Verschmutzung des Fluides beitragen, womit die Funktionsfähigkeit der angeschlossenen Anlage sowie des Ventils beeinträchtigt werden können.

Aus der US-A-5 184 804 ist eine Ventilbaugruppe nach dem Oberbegriff des Anspruchs 1 bekannt geworden, bei der ein durch plastische Verdrängung des Ventilwerkstoffs entstehender Abrieb in einem zwischen dem Ventilaufnahmekörper und dessen Vorsprung bestehendem Spalt aufgefangen werden soll. Hierzu ist im Bereich des Spalts ein möglichst klein tolerierter Abstand zwischen der Gehäusebohrung und dem Ventilaufnahmekörper einzuhalten, damit ein im Bereich des Spalts gelegener Hohlraum den Abrieb aufnimmt. Dieser Hohlraum steht über den eng tolerierten Spalt mit einem von der Flüssigkeit durchströmten weiteren Hohlraum des Ventils in Verbindung.

Daher ist es die Aufgabe der vorliegenden Erfindung, ein Ventil der eingangs beschriebenen Art zu schaffen, daß etwaige durch den Einstemmvorgang gelöste Oberflächenpartikel von dem im nachfolgenden Betrieb der Anlage flüssigkeitsumspülten Hohlraum fernhält.

Diese Aufgabe wird erfindungsgemäß im wesentlichen durch die kennzeichnenden Merkmale des Patentanspruchs 1 gelöst.

Damit ist ein möglichst kompaktes Ventil geschaffen, daß sich durch eine besonders einfache und betriebssichere Anordnung und Abdichtung im Ventilaufnahmekörper auszeichnet.

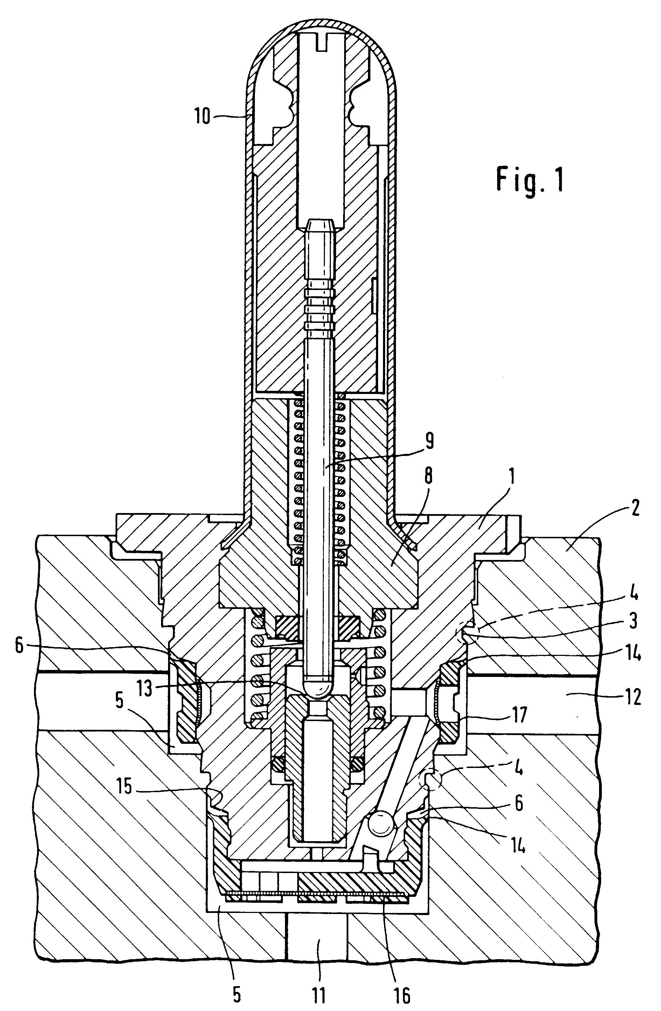

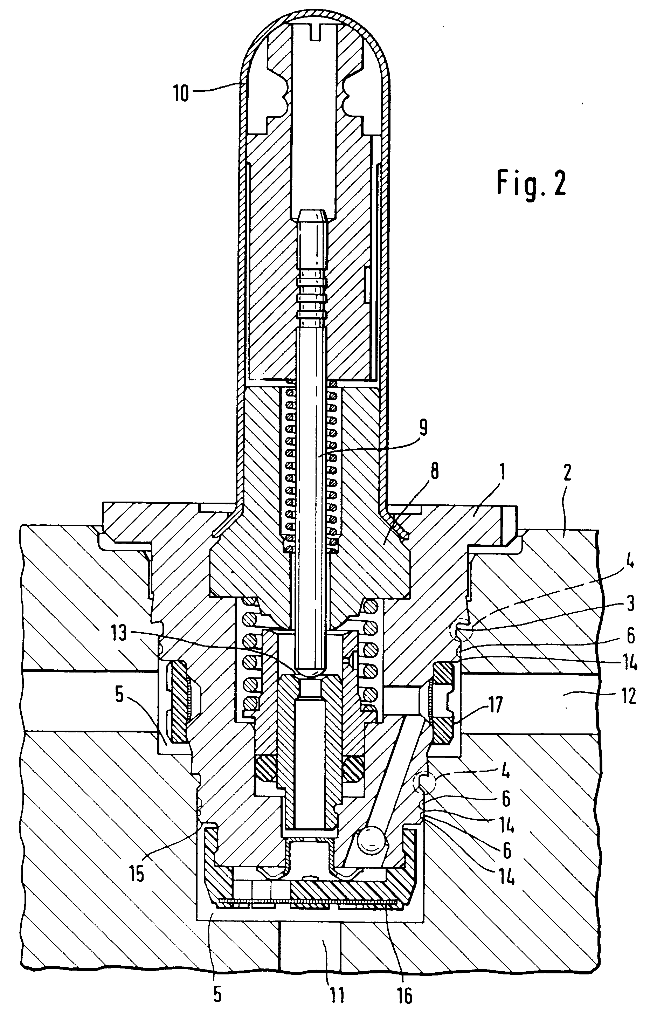

Weitere Ziele, Merkmale, Vorteile und Anwendungsmöglichkeiten der vorliegenden Erfindung ergeben sich aus der nachfolgenden Beschreibung zweier Ausführungsbeispiele anhand der Zeichnungen gemäß der Figuren 1 und 2. Dabei bilden alle beschriebenen oder bildlich dargestellten Merkmale für sich oder in beliebiger sinnvoller Kombination den Gegenstand der Erfindung, unabhängig von ihrer Zusammenfassung in den Ansprüchen oder deren Rückbeziehung.

Die Figur 1 zeigt beispielhaft einen Querschnitt durch ein in der Grundstellung elektromagnetisch geöffnetes Ventil mit der erfindungsgemäßen Befestigung des Ventilgehäuses 1 im Ventilaufnahmekörper 2 in einer erheblich vergrößerten Darstellung. Das Ventilgehäuse 1 ist ein im wesentlichen hülsenförmiges, nur wenige Millimeter abmessendes Teil, welches vorzugsweise aus kaltgezogenem und aus einem relativ zum Ventilaufnahmekörper 2 härteren Werkstoffgefüge besteht.

Der vorzugsweise aus einer Aluminiumlegierung gefertigte Ventilaufnahmekörper 2 ist dementsprechend weniger hart als das beispielsweise aus Automatenstahl hergestellte Ventilgehäuse 1. Dieser Härteunterschied ist letztlich auch ausschlaggebend für die im wesentlichen kraftschlüssige Befestigung des Ventilgehäuses 1 im Ventilaufnahmekörper 2. Als konstruktiv zweckdienliche Maßnahme erweist sich die als umlaufende Ringnuten ausgeführten Ausnehmungen 3 am Ventilgehäuse 1, die nährungsweise hohlkehlenförmig jeweils an der im Durchmesser abgestuften Mantelfläche des Ventilgehäuses 1 angeordnet sind. Hierdurch kann das relativ weiche Werkstoffvolumen des Ventilaufnahmekörpers 2 während des Einstemmvorganges jeweils als umlaufende Nase in die Ausnehmungen 3 plastisch verformt einfließen und verdichtet werden. Damit übernimmt das Ventilgehäuse 1 - infolge seiner in Fügerichtung abnehmenden Abstufung des Durchmessers - die Funktion eines Verstemmstempels, dem die Stufenbohrung des Ventilaufnahmekörpers 2 im Durchmesser angepaßt ist. Die ursprüngliche Tiefe der jeweiligen Bohrungsstufe im Ventilaufnahmekörper 2 ist um das in Fügerichtung in die Ausnehmung 3 zu verdrängende Volumen entsprechend kleiner bemessen als der erforderlichen Verstemmhub des Verstemmstempels bzw. des Ventilgehäuses 1.

Wie aus der Darstellung hervorgeht, nimmt das hülsenförmige Ventilgehäuse 1 die vom Ventilstößel 9 zu steuernde Druckmitteldurchgangsbohrungen 11, 12, den Magnetkern 8, die Ventilhülse 10, den Ventilsitz 13 und einen Plattenfilter 16 auf. Ein Ringfilter 17 befindet sich am Außenumfang des Ventilgehäuses 1 auf Höhe der Druckmitteldurchgangsbohrung 12, die in den druckmittelführenden Hohlraum 5 einmündet. Das Ringfilterelement 17 übernimmt nicht nur die Funktion des Ausfilterns von Druckmittel-Verunreinigungen, sondern ist in seinem Außendurchmesser, in der Funktion eines Dichtelementes derart bemessen, daß gleichzeitig eine Abdichtung mittels einer radial sich erstreckenden Dichtkante 14 zwischen der Stufenbohrung und der oberhalb des Ringfilters 17 gelegenen Verstemmstelle 4 vorhanden ist.

Hierdurch ergibt sich zwischen der beispielhaft als Dichtlippe (Dichtkante 14) gezeigten Trennstelle des druckmittelführenden Hohlraums 5 und der Verstemmstelle 4 ein weiterer, vom Druckmittelmedium getrennter Hohlraum 6, der evtl. anfallende Oberflächenpartikel der Verstemmstelle 4 aufnimmt. Der als Partikelauffangraum wirksame weitere Hohlraum 6 übernimmt somit die Funktion einer Schmutzfalle. Gleichfalls befindet sich unterhalb der zweiten Verstemmstelle 4 eine Festkörper- und Schmutzpartikel aufnehmender weiterer Hohlraum 6, der gleichfalls über eine am Plattenfilter 6 umlaufende Dichtlippe (Dichtkante 14) das Eindringen von Festkörperpartikeln in den Druckmittel führenden Hohlraum 5 in Richtung der Druckmitteldurchgangsbohrung 11 verhindert. Zur Ausbildung des als Mediumtrenner wirksamen weiteren Hohlraums 6 ist jeweils ein stufenförmig am Ventilgehäuse 1 umlaufender Absatz 15 vorgesehen, der von der Verstemmstelle 4, der Wandung des Ventilaufnahmekörpers 2 und der Dichtlippe (Dichtkante 14) am Ringfilter 17 bzw. Plattenfilter 16 begrenzt ist. Durch die gewählte Form der Dichtlippe (Dichtkante 14) ist selbst bei einem Eindringen von Druckmittel aus dem flüssigkeitsgefüllten Hohlraum 5 in den weiteren, die Festkörperpartikel aufnehmenden Hohlraum 6 ein Entweichen und Verschmutzen der Druckmitteldurchgangsbohrungen 11, 12 infolge der Rückschlagwirkung der Dichtkante 14 ausgeschlossen. Etwaiges in den die Abriebpartikel aufnehmenden Hohlraum 6 einströmendes Druckmittel unterstützt die Sperrwirkung der Dichtlippe (Dichtkante 14), so daß allenfalls ein Druckausgleich vor und hinter der Dichtlippe (Dichtkante 14) entstehen kann.

Die sichere Abdichtung des Ventilsgehäuses 1 im Ventilaufnahmekörper 2 ist jeweils durch die abbildungsgemäß oberhalb und unterhalb zur Druckmitteldurchgangsbohrung 12 angeordnete Verstemmstelle 4 gewährleistet, so daß einerseits bei einem geschlossenen Ventilstößel 9 ein Kurzschlußstrom und somit ein Druckausgleich zwischen den beiden Druckmitteldurchgangsbohrungen 11, 12 verhindert ist, andererseits bei geöffneten Ventilstößel 9 das unter hohem Druck stehende Fluid nicht in Richtung der abbildunggemäßen oberen Verstemmstelle 4 an die Oberfläche der Ventilaufnahmekörpers 2 durchdringen kann. Folglich erzeugen die Verstemmstellen 4 nicht nur die Haltekraft zur Befestigung des Magnetventils im Ventilaufnahmekörper 2, sondern bewirken im entscheidendem Maße die Abdichtung der hydraulisch beaufschlagten Ventilkomponenten im Ventilaufnahmekörper 2. Bei entsprechender Wahl und Anordnung von Dichtkanten 14 zwischen der Stufenbohrung des Ventilaufnahmekörpers 2 und dem Ventilgehäuse 1, ist eine völlige Trennung des druckmittelführenden Hohlraums 5 vom weiteren, die Festkörperpartikel aufnehmenden Hohlraum 6 möglich, so daß eine zusätzliche Dichtwirkung zwischen den beiden Teilen 1,2 zustande kommt.

Ergänzend wird deshalb zu den vorherigen Erläuterungen auf die alternative Anordnung von separat von den Filtern am Ventilgehäuse langebrachten elastischen Dichtkanten 14 in Form von Ringdichtungen hingewiesen, die in ihrem Außendurchmesser an den Innendurchmesser der Stufenbohrung angepaßt sind, so daß durch den gewählten Absatz 15 am Ventilgehäuse 1 ein Festkörperpartikel aufnehmender Hohlraum 6 verbleibt, der von der jeweiligen Verstemmstelle 4 und dem Dichtelement begrenzt ist. Wesentlich für die Erfindung ist, daß in Fügerichtung des Ventilgehäuses 1 in die Stufenbohrung des Ventilaufnahmekörpers 2 ein der Ausnehmung 3 am Ventilgehäuse 1 vorgelagerter Hohlraum 6 zum Auffangen von Abrieb vorhanden ist, der jeweils von einem entsprechend zwischen dem Ventilgehäuse 1 und der Stufenbohrung anliegenden Dichtelement vom druckmittel führenden Hohlraum 5 getrennt ist. Hierbei ist es von untergeordneter Bedeutung, ob das Dichtelement an der Stufenbohrung oder am Ventilgehäuse 1 befestigt ist.

Die Figur 2 zeigt im Detail abweichend von Fig. 1 zur Bildung des Schmutzpartikel aufnehmenden Hohlraums 6, eine hohlkehlen- bzw. nutförmige Ausnehmung am Umfang des Ventilgehäuses 1, die oberhalb des Ringfilters 17 und der Druckmittelbohrung 12 gelegen ist. Die metallische Abdichtung zwischen dem Ventilgehäuse 1 und dem Ventilaufnahmekörper 2 ist dabei durch die als Dichtkante 14 wirksame Flanke der Ausnehmung für den Hohlraum 6 gewährleistet. Die metallische Abdichtung des Hohlraums 6 kann gleichfalls durch Hintereinanderreihung mehrerer Dichtkanten 14 geschehen, mit dem Vorteil, daß jeweils einer Dichtkante 14 wiederum ein als Schmutzfalle nachgeschalteter Hohlraum 6 folgt, womit sich einerseits hinsichtlich der Abdichtungsmaßnahme mit einer Labyrinthabdichtung vergleichbare Vorteile erzielen lassen, andererseits die Vervielfachung der Hohlräume 6 zu einer Erhöhung der Partikel-Volumenaufnahme beiträgt. Dies ist beispielhaft in Fig. 2 im Bereich oberhalb des Plattenfilters 16 durch Anordnung von redundanten Hohlräumen 6 und Dichtkanten 14 verdeutlicht.

Durch die Erfindung ist es möglich, die Ventile im Ventilaufnahmekörper 2 zu verstemmen, ohne Verschmutzungen von funktionsrelevanten Bauteilen in Kauf nehmen zu müssen, so daß besondere Spül- und Reinigungsvorgänge der hydraulischen Kanäle entfallen.

Weitere Anwendungsmöglichkeiten der Erfindung sind für alle Ventile mittels einer Selbstverstemmung in einem Gehäuse befestigten Funktionselemente gegeben, die hinsichtlich ihrer Paßgenauigkeit und Gestaltung der Kanäle besonderer Innensauberkeit unterliegen. Dies trifft insbesondere für alle Druck- und Stromregelventile, Überdruckventile sowie Rückschlagventile, Blenden und Drosseleinrichtungen zu, unabhängig davon, ob es sich bei den Ventilen um Sitz- oder Schieberventile handelt.

### Bezugszeichenliste

- 1: Ventilgehäuse
- 2: Ventilaufnahmekörper
- 3: Ausnehmung
- 4: Verstemmstelle
- 5: Hohlraum
- 6: Hohlraum
- 8: Magnetkern
- 9: Ventilstößel
- 10: Ventilhülse
- 11: Druckmitteldurchgangsbohrung
- 12: Druckmitteldurchgangsbohrung
- 13: Ventilsitz
- 14: Dichtkante
- 15: Absatz
- 16: Plattenfilter
- 17: Ringfilter

## Patentansprüche

1. Ventil, insbesondere Elektromagnetventil, mit einem Ventilgehäuse (1),das mehrere die Funktionen des Ventils bestimmte Ventilbauteile, wie Ventilschließglied, Ventilsitz (13) aufweist, mit am Umfang des Ventilgehäuses (1) vorgesehenen Dichtflächen, die mit einem das Ventilgehäuse (1) tragenden Ventilaufnahmekörper (2) korrespondieren und eine Verstemmstelle (4) bilden, die durch plastische Verdrängung des am Umfang des Ventilaufnahmekörper (2) befindlichen Werkstoffvolumens in eine am Umfang befindliche Ausnehmung (3) des Ventilgehäuses (1) gebildet ist, wobei die Verstemmstelle (4) von einem Druckmittel führenden Hohlraum (5) getrennt ist, mit einem weiteren, der Verstemmstelle (4) zugeordneten Hohlraum (6), der die durch die plastische Verdrängung von Werkstoffvolumen in die Ausnehmung (3) entstandenen Festkörperpartikel aufnimmt, sowie mit einer das Ventilgehäuse (1) durchsetzenden, das Druckmittel leitenden Durchgangsbohrung (12), **dadurch gekennzeichnet**, daß oberhalb und unterhalb der Durchgangsbohrung (12) jeweils eine Verstemmstelle (4) und ein dazu zugeordneter Hohlraum gelegen ist, und daß jeweils der die Festkörperpartikel aufnehmende Hohlraum (6) jeweils von dem das Druckmittel führenden Hohlraum (5) durch eine zwischen dem Ventilgehäuse (1) und dem Ventilaufnahmekörper (2) abdichtenden Dichtkante (14) getrennt ist.

2. Ventil nach Anspruch 1, **dadurch gekennzeichnet**, daß die Dichtkante (14) am Ventilgehäuse (1) oder am Ventilaufnahmekörper (2) angebracht ist.

3. Ventil nach Anspruch 1, **dadurch gekennzeichnet**, daß die Dichtkante (14) eine Dichtlippe aufweist.

4. Ventil nach Anspruch 3, **dadurch gekennzeichnet**, daß die Dichtlippe eine in Richtung des weiteren Hohlraums (6) wirksame Rückschlagventilfunktion inne hat.

5. Ventil nach Anspruch 1, **dadurch gekennzeichnet**, daß die Dichtkante (14) Bestandteil eines im ersten Hohlraum (5) eingesetzten Filterelements (16, 17) ist.

## Claims

1. Valve, particularly an electromagnetic valve, with a valve housing (1) including several valve components determining the functions of the valve, as e.g. valve closing element, valve seat (13) with sealing surfaces provided on the circumference of the valve housing (1) which correspond with a valve accommodating element (2) supporting the valve housing (1) and forming a calking point (4) which is formed by plastic yielding of the material volume being provided on the circumference of the valve accommodating element (2) into a circumferential recess (3) of the valve housing (1), the calking point (4) being separated from a hollow space (5) containing pressure fluid, with a second hollow space (6) being attributed to the calking point (4) collecting the solids particles resulting from the plastic yielding of material volume into the recess (3), as well as with a through-bore (12) extending into the valve housing (1) and containing the pressure fluid, **characterized by** that above and below the through-bore (12) there is a calking point (4) and a hollow space attributed to it and that the hollow space (6) collecting the solids particles is separated from the hollow space (5) containing the pressure fluid by means of a sealing edge (14) between the valve housing (1) and the valve accommodating element (2).

2. Valve according to claim 1, **characterized by** that the sealing edge (14) is arranged on the valve housing (1) or on the valve accommodating element (2).

3. Valve according to claim 1, **characterized by** that the sealing edge (14) includes a sealing lip.

4. Valve according to claim 3, **characterized by** that the sealing lip has the function of a check valve being effective in the direction of the second hollow space (6).

5. Valve according to claim 1, **characterized by** that the sealing edge (14) is part of a filter element (16, 17) being inserted in the first hollow space (5).

## Revendications

1. Valve, notamment valve à électro-aimant, comprenant un boîtier de valve (1), qui comporte plusieurs éléments de valve, tels qu'obturateur de valve, siège de valve (13), déterminant les fonctions de la valve, des surfaces d'étanchéité prévues à la périphérie du boîtier de valve (1), qui correspondent à un corps de logement de valve (2) portant le boîtier de valve (1) et forment un emplacement d'encastrement (4) qui est réalisé au moyen d'un refoulement plastique du volume de matière se trouvant à la périphérie du corps de logement de valve (2) dans un évidement (3) du boîtier de valve (1) qui se trouve à la périphérie, l'emplacement d'encastrement (4) étant séparé d'une cavité (5) laissant passer un agent de pression, une seconde cavité (6), associée à l'emplacement d'encastrement (4) et servant à recevoir des particules de matières solides se présentant sous l'effet du refoulement plastique de volumes de matière dans l'évidement (3), et un perçage de passage (12) traversant le boîtier de valve (1) et servant au passage de l'agent de pression, caractérisée en ce qu'au-dessus et au-dessous du perçage de passage (12), il est dans chaque cas disposé un emplacement d'encastrement (4) respectif et une cavité associée à celui-ci et en ce que, dans chaque cas, la cavité (6) recevant les particules de matières solides est séparée respectivement de la cavité (5) laissant passer l'agent de pression par une arête d'étanchéité (14) assurant l'étanchéité entre le boîtier de valve (1) et le corps de logement de valve (2).

2. Valve suivant la revendication 1, caractérisée en ce que l'arête d'étanchéité (14) est réalisée sur le boîtier de valve (1) ou sur le corps de logement de valve (2).

3. Valve suivant la revendication 1, caractérisée en ce que l'arête d'étanchéité (14) comprend une lèvre d'étanchéité.

4. Valve suivant la revendication 3, caractérisée en ce que la lèvre d'étanchéité remplit une fonction de valve antiretour exerçant son action en direction de la seconde cavité (6).

5. Valve suivant la revendication 1, caractérisée en ce que l'arête d'étanchéité (14) est une partie constitutive d'un élément de filtre (16, 17) disposé dans la première cavité (5).
